# EUROPÄISCHE PATENTSCHRIFT

(11) **EP 0 337 282 B1**
(45) Veröffentlichungstag und Bekanntmachung des Hinweises auf die Patenterteilung: **30.03.1994**
(21) Anmeldenummer: 89106009.7
(22) Anmeldetag: 06.04.1989
(51) Int. Cl.: C08L 95/00

(54) **Bituminöse Masse und deren Verwendung**
Bituminous composition and its uses
Composition bitumineuse et ses applications

(30) Priorität: 13.04.1988 DE 3812217
(43) Veröffentlichungstag der Anmeldung: 18.10.1989
(73) Patentinhaber: Perstorp Components GmbH, D-67466 Lambrecht (DE)
(72) Erfinder: Grünert, Klaus, D-6945 Hirschberg (DE); Jösel, Rainer, D-7500 Karlsruhe (DE)
(74) Vertreter: UEXKÜLL & STOLBERG

(56) Entgegenhaltungen:
- AU-B- 14 241
- FR-A- 2 283 179
- GB-A- 2 041 951

## Beschreibung

Die Erfindung betrifft eine bituminöse Masse aus Bitumen, Füllstoff und Modifizierungsmittel sowie gegebenenfalls üblichen Zusätzen und deren Verwendung.

Es ist bekannt, Bitumen mit nicht-thermoplastischen und thermoplastischen Polymerkomponenten wie Ethylen-Vinylacetat-Copolymeren zu modifizieren. Weiterhin ist die Verwendung von Styrol-Butadien-Styrol-Blockcopolymerisaten (SBS), wie sie beispielsweise unter der Bezeichnung Cariflex® TR im Handel erhältlich sind, in verschiedenen Kombinationen wie SBS-Füllstoff-Öl oder Bitumen-SBS-Füllstoff bekannt. Die üblichen Zusatzmengen dieser Polymeren zum Bitumen betragen 5 - 50 Gew.% und vorzugsweise mehr als 20 Gew.%. Das Ziel all dieser Modifizierungsvarianten ist die Erweiterung der Plastizitätsspanne und/oder die Übertragung von elastischen Eigenschaften auf die bituminösen Massen (vgl. DE-OS 30 34 848, DE-OS 30 00 307 und PCT WO 86/06736).

Weiterhin ist aus der GB-A-2 041 951 eine bituminöse Mischung aus Bitumen, einem gehärteten Extrakt, einem thermoplastischen Kautschuk, einem feinteiligen nicht-thermoplastischen Kautschuk und einem Füllstoff bekannt, wobei der gehärtete Extrakt und der feinteilige nicht-thermoplastische Kautschuk notwendige Bestandteile der Mischung und für die Eigenschaften dieser Mischung von ausschlaggebender Bedeutung sind. Das Gewichtsverhältnis von Bitumen zu gehärtetem Extrakt soll zwischen 7:3 und 1:1 liegen, d.h. der gehärtete Extrakt wird in einer Menge eingesetzt, die in der gleichen Größenordnung wie die Bitumenmenge liegt. Als feinteiliger nicht-thermoplastischer Kautschuk wird vorzugsweise Reifenabrieb verwendet.

Außerdem werden in der AU-B-14241 füllstoffhaltige bituminöse Massen beschrieben, die als Modifizierungsmittel Styrol-Butadien-Kautschuk und Ethylen-Vinylacetat-Copolymere (EVA) enthalten, wobei letzteres als Antiblockingmittel dient, um die Haftung bei der Lagerung von aus diesen Massen hergestellten Folien aneinander zu verringern. Es wird ein statistisches Styrol-Butadien-Copolymer verwendet, dessen Styrolgehalt 30 Gew.% nicht übersteigt. Das EVA-Copolymer soll einen Vinylacetatgehalt von 18 bis 33 Gew.% aufweisen. Der Schmelzindex soll vorzugsweise 20 betragen. Irgendeine Lehre, daß Butadien-Styrol-Kautschuk und EVA in einem bestimmten Mengenverhältnis eingesetzt werden müssen, findet sich in dieser Druckschrift nicht.

Es wurde nun überraschend gefunden, daß die Wirksamkeit der als Modifizierungsmittel dienenden Polymere im bituminösen Bindemittel eines Bitumen-Füllstoff-Gemisches erheblich verbessert werden kann, wenn man eine Kombination von bestimmten thermoplastischen Kautschuktypen in einem bestimmten Verhältnis als Modifizierungsmittel verwendet.

Gegenstand der Erfindung ist dementsprechend eine bituminöse Masse aus Bitumen, 40 - 85 Gew.% Füllstoff und, bezogen auf Bitumen, 2-50 Gew.% Modifizierungsmittel sowie gegebenenfalls bis zu 20 Gew.% üblichen Zusätzen, die dadurch gekennzeichnet ist, daß sie als Modifizierungsmittel lineares Styrol-Butadien-Styrol-Blockcopolymerisat (SBS) mit einem Styrolgehalt von 25 - 40 Gew.% und einem Schmelzindex von 1 bis 15 g/10 min (200°C; 5 kg; ASTM D 1238-65 T) und Ethylen-Vinylacetat-Copolymerisat (EVA) mit einem Vinylacetatgehalt von 40 - 50 Gew.% und einem Schmelzindex von 2 bis 15 g/10 min (190°C; 2,16 kg; DIN 53 735) enthält, wobei das Gewichtsverhältnis SBS zu EVA 2 : 1 bis 6 : 1 beträgt.

Gegenstand der Erfindung ist ferner die Verwendung der erfindungsgemäßen bituminösen Masse zur Herstellung von Folien, Platten, Formkörpern, Kitten, Spachtelmassen, Dach- und Dichtungswerkstoffen. Bevorzugte Ausführungsformen der Erfindung ergeben sich aus den Unteransprüchen und der nachfolgenden Beschreibung.

Die erfindungsgemäße bituminöse Masse führt zu einer Verbesserung der Verarbeitungseigenschaften für den Anwender. Dies gilt insbesondere für dicke Bitumenfolien aufgrund deren besonderer Flexibilität. Ferner besitzt die erfindungsgemäße bituminöse Masse einen verhältnismäßig hohen Erweichungspunkt, was z.B. für das blasenfreie Aufschmelzen von Folien, insbesondere bei Verwendung von IR-Strahlern von Vorteil ist. Darüber hinaus zeigen die erfindungsgemäße bituminöse Masse bzw. die daraus hergestellten Produkte wie Folien ein verbessertes Alterungsverhalten, d.h. eine wesentliche Verringerung der Versprödungsneigung. Auch das Tieftemperaturverhalten ist verbessert, d.h. daß beispielsweise eine aus der erfindungsgemäßen bituminösen Masse hergestellte Dämpfungsfolie (Folie zur Dämpfung von Körperschall und Entdröhnung von Metallkonstruktionen) eine einwandfreie Haftung auf dem Untergrund selbst bei Schlagbeanspruchung bei tiefer Temperatur zeigt. Schließlich ist die Neigung zum Ausschwitzen öliger Bestandteile aus der erfindungsgemäßen bituminösen Masse bzw. den daraus hergestellten Produkten, besonders bei erhöhten Temperaturen, deutlich verringert. Besonders überraschend ist, daß die guten Eigenschaften beispielsweise der aus der erfindungsgemäßen bituminösen Masse hergestellten Folien auch bei extremen Füllgraden mit billigen Füllstoffen im wesentlichen erhalten bleiben, so daß aus der erfindungsgemäßen bituminösen Masse äußerst preisgünstige Produkte wie Folien hergestellt werden können.

Die Wirksamkeit des erfindungsgemäß verwendeten Modifizierungsmittels beruht zum einen auf der Auswahl der spezifischen SBS- und EVA-Komponenten und zum anderen auf der Einhaltung des angegebenen Mengenverhältnisses dieser beiden Komponenten. Es ist völlig überraschend, daß hierdurch insbesondere bezüglich der meist übermäßigen Steifigkeit, der Versprödung bei Alterung und der meist unzureichenden Kälteflexibilität von Produkten des Standes der Technik, insbesondere Folien, erhebliche Verbesserungen erreicht werden.

Das in der erfindungsgemäßen bituminösen Masse enthaltene Bitumen ist handelsübliches Bitumen, wie es üblicherweise für die oben genannten Anwendungsgebiete eingesetzt wird und in der Literatur beschrieben ist (vgl. z.B. DE-OS 33 00 307, S. 6, Zeilen 3-14). In der Regel handelt es sich um Destillatbitumen (Primärbitumen) mit einem Penetrationswert von mehr als 20 x 10⁻¹ mm und einem Erweichungspunkt unterhalb 60°C (DIN 1995) und vorzugsweise Bitumen B 200 oder B 80 (vgl. ebenfalls DIN 1995).

Auch die als Modifizierungsmittel dienenden Komponenten SBS und EVA sind im Handel erhältliche Produkte (siehe z.B. die oben erwähnten Produkte der Cariflex® TR-Serie, die erfindungsgemäß verwendet werden können). Selbstverständlich ist darauf zu achten, daß das verwendete SBS-Blockcopolymerisat den oben angegebenen Styrolgehalt und ein niedriges bis mittleres Molekulargewicht entsprechend einem Schmelzindex von 1 bis 15 und vorzugsweise etwa 6 g/10 min (200°C; 5 kg; ASTM D 1238-65 T) und das EVA den angegebenen Vinylacetatgehalt und ein mittleres Molekulargewicht entsprechend einem Schmelzindex von 2 bis 15 und vorzugsweise etwa 5 g/10 min (190°C; 2,16 kg; DIN 53735) aufweist. Wichtig ist, daß die beiden Modifizierungsmittelkomponenten in einem bestimmten Gewichtsverhältnis vorliegen. Dieses Gewichtsverhältnis von SBS zu EVA beträt 2:1 bis 6:1 und vorzugsweise 3:1 bis 4:1. Bezogen auf das Bitumen liegt das Modifizierungsmittel insgesamt in einer Menge von 2 - 50 Gew.% und insbesondere 10 - 15 Gew.% vor.

Der Füllstoffgehalt der erfindungsgemäßen bituminösen Masse beträgt in der Regel mindestens 40 Gew.% und vorzugsweise mindestens 50 Gew.%. Dementsprechend beträgt der Füllstoffgehalt in der Praxis häufig 60 - 85 Gew.% und insbesondere 70 - 80 Gew.%. Als Füllstoffe können alle üblichen Füllstoffe für Bitumen verwendet werden. Die versteifende Wirkung nimmt in Abhängigkeit von der Kornform bekanntermaßen in der Reihenfolge fibrillar, laminar, korpuskular ab. Geeignet sind neben den besonders kostengünstigen Füllern wie z.B. Kalksteinmehl, Kreide oder Filterasche auch Schiefermehl, Glimmer, Quarzmehl, Mikrohohlkugeln und Schwerspat sowie Glasfasern, Steinwolle oder Zellfasern, die je nach gewünschter Konsistenz und spezifischem Gewicht der bituminösen Masse allein oder in Kombination eingesetzt werden können (vgl. auch die oben angegebenen Patentanmeldungen).

Die Auswahl und Kombination von sonstigen üblichen Zusätzen bzw. Zuschlagstoffen stellt für den Fachmann kein Problem dar und hängt hauptsächlich von dem jeweils vorgesehenen Anwendungszweck der erfindungsgemäßen bituminösen Masse ab. Beispiele für übliche Zusätze sind Gleitmittel und ähnliche Verarbeitungshilfsmittel, speziell klebrig- oder weichmachende Zusätze, Zusätze zur Verbesserung der Wärmeleitfähigkeit, der Flammwidrigkeit, Alterungsinhibitoren, Korrosionsinhibitoren, Biozide und Farbpigmente.

Der Anteil derartiger üblicher Zusätze wie Graphit, Talkum, Kohlenwasserstoff-Harze und Polyolefine beträgt nicht mehr als 20 Gew.% und vorzugsweise 5 bis 10 Gew.%. Zusätze wie Metallseifen, Metalloxide, Alterungsinhibitoren und ähnliche werden selten in einer Menge von mehr als 3 Gew.% und vorzugsweise in einer Menge von 0,5 bis 2 Gew.% verwendet.

Auch die Herstellung der erfindungsgemäßen bituminösen Masse bietet keine Besonderheiten und erfolgt in der aus dem Stand der Technik bekannten Weise. Gewöhnlich werden alle Komponenten in einem Rührwerk bei erhöhten Temperaturen um 200°C intensiv miteinander vermischt. Die erhaltene bituminöse Masse wird dann je nach vorgesehenem Verwendungszweck weiterverarbeitet. Zur Herstellung von Bitumenfolien wird die Masse beispielsweise über ein Kalanderwalzwerk oder mittels anderer geeigneter Technologien wie Rakeln, Extrudieren usw. verarbeitet. Die Herstellung und die Verarbeitung der bituminösen Masse sollten eine Stunde bei Temperaturen bis 230°C nicht übersteigen.

Eine in der obigen Weise hergestellte bituminöse Masse, die sich insbesondere für die Herstellung von Dämpfungsfolien als sehr gut geeignet erwiesen hat, besteht aus 14 - 50 Gew.-Teilen Bitumen (Primärbitumen), vorzugsweise B 200 oder B 80, 0,8 - 20 Gew.-Teilen SBS, 0,2 - 5 Gew.-Teilen EVA und 50 - 85 Gew.-Teilen mineralischem Füllstoff, insbesondere Kalksteinmehl, Schiefermehl, Glimmer und/oder Schwerspat.

Im folgenden wird die Erfindung anhand von Beispielen näher erläutert, die die bevorzugte Verwendung der erfindungsgemäßen bituminösen Masse als Dämpfungsfolie beschreiben.

### Beispiel 1

19,5 Gew.% Bitumen B 200,
2,0 Gew.% SBS-Bockcopolymerisat mit einem Styrolgehalt von 28 Gew.% und Schmelzindex 6,
0,5 Gew.% EVA mit einem Vinylacetatgehalt von 43 - 47 Gew.% und Schmelzindex 5 und
78,0 Gew.% Kalksteinmehl mit einer solchen Teilchengröße, daß mindestens 80 % der Teilchen kleiner als 0,090 mm sind,
wurden in einem Rührwerk bei 190 bis 230°C intensiv miteinander vermischt. Die so erhaltene bituminöse Masse wurde in herkömmlicher Weise zu einer Bitumenfolie verarbeitet.

Die erhaltene Bitumenfolie wurde mit selbstklebenden oder wärmeaktivierbaren Haftklebern ausgerüstet. Die so erhaltene Dämpfungsfolie war bei einer Dicke von 4,0 mm hochflexibel und zeigte ein hohes Wärmestandvermögen:

| | | |
|---|---|---|
| - | Erweichungspunkt der bituminösen Masse nach Wilhelmi (DIN 1996 T 15) | mind. 230°C |
| - | Biegsamkeit um einen Dorn mit 25 mm Durchmeser (180° Biegeradius) ohne Materialbruch bis | mind. 5°C |
| - | Weichheit, ermittelt als die durch das Eigengewicht bewirkte Absenkung des freien Endes eines 100 mm über die Kante einer ebenen Auflagefläche hinausragenden Probestreifens (250 x 50 mm), welche nach 10 min. +/- 5 s bei 23 +/- 2°C erreicht ist | mind. 70 mm |
| - | Verlustfaktor, geprüft nach DIN 53440 auf 1 mm Stahlblech bei 20°C, bezogen auf 200 Hz | mind. 0,30 |

### Beispiel 2

Beispiel 1 wurde wiederholt mit dem Unterschied, daß anstelle von Bitumen B 200 Bitumen B 80 verwendet wurde. Eine aus der auf diese Weise erhaltenen bituminösen Masse hergestellte Bitumenfolie mit einer Dicke von 4,0 mm besaß neben einem hohen Wärmestandvermögen eine noch beachtliche Flexibilität und gute Dämpfungseigenschaften:

| | | |
|---|---|---|
| - | Erweichungspunkt der bituminösen Masse nach Wilhelmi (DIN 1996 T 15) | mind. 240°C |
| - | Biegsamkeit um einen Dorn mit 25 mm Durchmesser (180° Biegeradius) ohne Materialbruch | mind. 15°C |
| - | Weichheit (Bestimmung wie in Beispiel 1 beschrieben) | mind. 50 mm |
| - | Verlustfaktor (DIN 53440) auf 1 mm Stahlblech bei 20°C, bezogen auf 200 Hz | mind. 0,33 |

## Patentansprüche

1. Bituminöse Masse aus Bitumen, 40 - 85 Gew.% Füllstoff und, bezogen auf Bitumen, 2 - 50 Gew.% Modifizierungsmittel sowie gegebenenfalls bis zu 20 Gew.% üblichen Zusätzen, **dadurch gekennzeichnet**, daß sie als Modifizierungsmittel lineares Styrol-Butadien-Styrol-Blockcopolymerisat (SBS) mit einem Styrolgehalt von 25 - 40 Gew.% und einem Schmelzindex von 1 bis 15 g/10 min (200°C; 5 kg; ASTM D 1238-65 T) und Ethylen-Vinylacetat-Copolymerisat (EVA) mit einem Vinylacetatgehalt von 40 - 50 Gew.% und einem Schmelzindex von 2 bis 15 g/10 min (190°C; 2,16 kg; DIN 53 735) enthält, wobei das Gewichtsverhältnis SBS zu EVA 2 : 1 bis 6 : 1 beträgt.

2. Bituminöse Masse nach Anspruch 1, die aus 14 - 50 Gewichtsteilen Bitumen, 0,8 - 20 Gewichtsteilen SBS, 0,2 - 5 Gewichtsteilen EVA und 50 - 85 Gewichtsteilen mineralischem Füllstoff, insbesondere Glimmer, Kalksteinmehl, Schiefermehl und/oder Schwerspat besteht.

3. Bituminöse Masse nach Anspruch 1 oder 2, in der das Gewichtsverhältnis SBS zu EVA 3 : 1 bis 4 : 1 beträgt.

4. Bituminöse Masse nach einem der Ansprüche 1 bis 3, in der der Füllstoffgehalt 60 - 85 Gew.-% beträgt.

5. Bituminöse Masse nach einem der Ansprüche 1 bis 4, in der das Bitumen Primärbitumen mit einem Penetrationswert von mehr als 20 x 10⁻¹ mm und einem Erweichungspunkt unterhalb 60°C ist.

6. Bituminöse Masse nach Anspruch 5, in der das Bitumen B 200 oder B 80 ist.

7. Bituminöse Masse nach einem der Ansprüche 1 bis 6, in der die Menge des Modifizierungsmittels bezogen auf das Bitumen 10 - 15 Gew.-% beträgt.

8. Verwendung der bituminösen Masse nach einem der Ansprüche 1 bis 7 zur Herstellung von Folien, Platten, Formkörpern, Kitten, Spachtelmassen, Dach- und Dichtungswerkstoffen.

9. Verwendung nach Anspruch 8 zur Herstellung von Dämpfungsfolien.

## Claims

1. A bituminous material composed of bitumen, 40 - 85% by weight of filler and, calculated by reference to bitumen, 2 - 50% by weight of modifiers as well as optionally up to 20% by weight of the usual additives, characterised in that it contains as modifiers linear styrene-butadiene-styrene block copolymerisate (SBS) with a styrene content of 25 - 40% by weight and a softening point of 1 to 15 g/10 min (200°C; 5 kg; ASTM D 1238-65 T) and ethylene-vinyl acetate copolymerisate (EVA) with a vinyl acetate content of 40 -50% by weight and a softening point of 2 to 15 g/10 min (190°C; 2.16 kg; DIN 53 735), wherein the ratio by weight of SBS to EVA is 2 : 1 to 6 : 1.

2. A bituminous material according to claim 1 consisting of 14 - 50 parts by weight of bitumen, 0.8 - 20 parts by weight of SBS, 0.2 - 5 parts by weight of EVA and 50 - 85 parts by weight of mineral filler, in particular mica, ground limestone, ground slate and/or heavy spar.

3. A bituminous material according to claim 1 or 2, wherein the ratio by weight of SBS to EVA is 3 : 1 to 4 : 1.

4. A bituminous material according to one of claims 1 to 3, wherein the content of filler is 60 - 85% by weight.

5. A bituminous material according to one of claims 1 to 4, wherein the bitumen is primary bitumen with a penetration value of more than 20 x 10⁻¹ mm and a softening point of under 60°C.

6. A bituminous material according to claim 5 wherein the bitumen is B 200 or B 80.

7. A bituminous material according to one of claims 1 to 6, wherein the quantity of modifiers calculated by reference to bitumen is 10 - 15% by weight.

8. Use of the bituminous material according to one of claims 1 to 7 for the preparation of films, sheets, composites, cements, fillers, roofing materials and sealing materials.

9. Use according to claim 8 for the preparation of absorbent films.

## Revendications

1. Masse bitumineuse à base de bitume, 40-85 % en poids de charge et, rapporté au bitume, 2-50 % en poids d'agent modifiant ainsi que le cas échéant jusqu'à 20 % en poids d'additifs usuels, caractérisée en ce qu'elle contient comme modifiant un bloc copolymère linéaire styrène-butadiène-styrène (SBS) avec une teneur en styrène de 25-40 % en poids et un indice de fusion de 1 à 15 g/10 min (2OO°C ; 5 kg ; ASTM D 12 38-65 T) et un copolymère éthylène-acétate de vinyle (EVA) avec une teneur en acétate de vinyle de 40-50 % en poids et un indice de fusion de 2 à 15 g/10 min (190°C ; 2,16 kg ; DIN 53 735), la proportion SBS à EVA étant de 2 : 1 à 6 : 1.

2. Masse bitumineuse selon la revendication 1, qui est constituée de 15-50 parties en poids de bitume, 0,8-20 parties en poids de SBS, 0,2-5 parties en poids d'EVA et 50-85 parties en poids de charge minérale, notamment du mica, de la chaux pulvérisée, de la poudre d'ardoise et/ou de la barytine.

3. Masse bitumineuse selon la revendication 1 ou 2, dans laquelle la proportion pondérale SBS à EVA vaut 3 : 1 à 4 : 1.

4. Masse bitumineuse selon l'une des revendications 1 à 3, dans laquelle la teneur en charge est de 60 - 85 % en poids.

5. Masse bitumineuse selon l'une des revendications 1 à 4, dans laquelle le bitume est du bitume primaire avec une valeur de pénétration de plus de 20 x 10⁻¹ mm et un point de ramollissement inférieur à 60°C.

6. Masse bitumineuse selon la revendication 5, dans laquelle le bitume est du B200 ou B80.

7. Masse bitumineuse selon l'une des revendications 1 à 6, dans laquelle la quantité d'agent modifiant rapportée au bitume est de 10-15 % en poids.

8. Utilisation de masse bitumineuse selon l'une des revendications 1 à 7, pour produire des feuilles, des plaques, des corps moulés, des enduits, des matrices, des matériaux d'étanchéité et de toiture.

9. Utilisation selon la revendication 8 pour produire des feuilles d'amortissement.
